(19) Europäisches Patentamt

European Patent Office

Office européen des brevets

(11) EP 1 681 585 A1

(12) EUROPEAN PATENT APPLICATION
published in accordance with Art. 158(3) EPC

(43) Date of publication:
19.07.2006 Bulletin 2006/29

(51) Int Cl.:
G02B 5/18 (1968.09)          G02B 5/30 (1968.09)
G11B 7/135 (1985.01)

(21) Application number: 04818204.2

(22) Date of filing: 05.11.2004

(86) International application number:
PCT/JP2004/016441

(87) International publication number:
WO 2005/045484 (19.05.2005 Gazette 2005/20)

(84) Designated Contracting States:
DE FR NL

(30) Priority: 07.11.2003 JP 2003377888

(71) Applicant: ASAHI GLASS COMPANY LTD.
Tokyo 100-8405 (JP)

(72) Inventors:
• MURATA, Koichi,
c/o Asahi Glass Company, Limited
1-chome, Chiyoda-ku, Tokyo,
1008405 (JP)

• UMEMURA, Naomitsu,
c/o Asahi Glass Company, Limite
Tokyo,
1008405 (JP)

(74) Representative: Müller-Boré & Partner
Patentanwälte
Grafinger Strasse 2
81671 München (DE)

(54) DIFFRACTION ELEMENT AND OPTICAL HEAD DEVICE

(57) A diffraction element and an optical head having a diffraction efficiency not changing depending on wavelength of light, wherein the diffraction efficiency setting in configurable in relation to wavelength, are provided.

In a diffraction element 10 diffracting light, an optically anisotropic medium 11 having birefringency and an optically isotropic medium 12 are periodically and alternately arranged, and in the optically anisotropic medium 11, a principal axis direction of refractive index ellipse in a plane perpendicular to the optical axis on which incident light is transmitted or in a plane close to the plane, is spirally rotated around an axis in parallel with the optical axis. In particular, the optically anisotropic medium 11 having birefringency can be constituted by a polymer liquid crystal formed by polymerizing a liquid crystal.

Fig. 1

LIGHT INCIDENT DIRECTION

EP 1 681 585 A1

## Description

TECHNICAL FIELD

The present invention relates to a diffraction element for diffracting light, and an optical head device for recording to and/or reproducing from an optical recording medium such as an optical disk, in which the diffraction element is arranged.

BACKGROUND ART

A diffraction element having periodical phase steps (which means a phase difference changing in a step-form) has diffraction efficiency changing depending on the phase step height and the wavelength of incident light. In a case where light to be used has a plurality of wavelengths, when the phase step height is set so as to produce an optimum diffraction efficiency at any one of these wavelengths, diffraction efficiencies at other wavelengths are usually different and desired diffraction efficiencies can not always be obtained at these wavelengths.

Further, in a case where the diffraction element is not a phase step type (phase modulation) but a transmittance modulation type (amplitude modulation type), there is substantially no dependency of diffraction efficiency on wavelength. However, in the case of transmittance modulation type (amplitude modulation type), since the transmittance is modulated periodically, portions having low transmittance are formed and transmission light quantity decreases in such portions, whereby there has been a problem that utilization efficiency of light is lowered.

Then, as an application of the diffraction element, an optical head comprising the diffraction element, to be used for an optical disk device, will be described.

As the most common application of the diffraction element, a diffraction element for generating three beams to be used for tracking servo, has been known.

For example, an optical head device capable of reproducing from or recording to DVDs and CDs, has light sources for emitting light of 650 nm wavelength band and that of 780 nm wavelength band corresponding to the respective optical disk types. Accordingly, if it is possible to use a common diffraction element for generating three beams of these two types of wavelength bands, such a diffraction element is effective for reducing the number of parts and downsizing an optical head device.

For the light source, a so-called twin LD can be employed, which emits light of the two types of wavelength bands from a single package.

DISCLOSURE OF THE INVENTION

PROBLEMS TO BE SOLVED BY THE INVENTION

However, with conventional diffraction elements, it has been difficult to obtain substantially the same diffraction efficiency at these two wavelengths or to realize a three-beam diffraction element having desired diffraction efficiencies at the respective wavelengths. Namely, when the diffraction efficiency of the diffraction element for light of DVD is set to be a desired value, diffraction efficiency for light of CD has become too low or too high (and vice versa), whereby there has been a problem in practical use.

Under these circumstances, development of a diffraction element having a diffraction efficiency scarcely changed depending on wavelength of light, or a diffraction element having a diffraction efficiency configurable in relation to wavelength, has been desired. Further, for an optical head device, a diffraction element having as close diffraction efficiencies as possible at at least two wavelengths of wavelengths of a 405 nm band, 650 nm band and 780 nm band, is desired.

The present invention has been made considering the above-mentioned circumstances, and it is an object of the present invention to provide a diffraction element having diffraction efficiency scarcely changed depending on wavelength of light and configurable in relation to wavelength, and an optical head device comprising such a diffraction element.

The present invention provides a diffraction element comprising an optically anisotropic medium having birefringency and an optically isotropic medium, the optically anisotropic medium and the optically isotropic medium being periodically and alternately arranged to diffract incident light, wherein a principal axis direction of the refractive index ellipse of the optically anisotropic medium, in a plane perpendicular to an optical axis direction on which the incident light is transmitted, is spirally rotated around an axis in parallel with the optical axis.

Further, the present invention provides the diffraction element wherein the optically anisotropic medium having birefringency, is a polymer liquid crystal formed by polymerizing a liquid crystal.

Further, the present invention provides the diffraction element wherein the short axis refractive index $n_o$ or the long axis refractive index $n_e$ of the material forming the optically anisotropic medium, is equal or close to the refractive index of the optically isotropic medium.

Further, the present invention provides the diffraction element wherein the twist angle of the principal axis direction of the refractive index ellipse, is within a range of from 10° to 90°.

Further, the present invention provides an optical head device comprising a light source for emitting light having at least two types of wavelengths, an objective lens for conversing light emitted from the light source on an optical recording medium, and a photodetector for receiving reflected light converged and reflected by the optical recording medium, wherein the above-mentioned diffraction element is disposed in an optical path between the light source and the optical recording medium on which the light having at least two types of wavelengths is transmitted.

Further, the present invention provides the optical head device wherein the principal axis direction of the refractive index ellipse in a plane in the light-incident side of the optically anisotropic medium of the diffraction element, is perpendicular to the optical axis direction of light transmitted through the optically anisotropic medium, and equal or close to the polarization direction of the incident light.

Further, the present invention provides the optical head device wherein the diffraction element and a phase plate for changing polarization state of transmission light, are integrally formed.

Further, the present invention provides the optical head device wherein the diffraction element and a polarizing diffraction element whose diffraction efficiency changes depending on polarization direction, are integrally formed.

Further, the present invention provides the optical head device wherein the phase of periodicity of the diffraction grating pattern of the diffraction element, changes in the main body of the diffraction element.

According to the present invention, a diffraction element and an optical head, whose diffraction efficiency scarcely changes depending on by wavelength of light, and whose diffraction efficiency is configurable in relation to wavelength.

BRIEF EXPLANATION OF THE DRAWINGS

Fig. 1: A cross-sectional view schematically showing an example of the diffraction element of the present invention.

Fig. 2: An explanation view schematically showing an example of the direction of anisotropy of refractive index in the thickness direction of the optically anisotropic medium of the diffraction element of the present invention.

Fig. 3: An explanation view schematically showing an example of incident polarization direction and optical axes of the optical anisotropic medium in the diffraction element of the present invention.

Fig. 4: An explanation view schematically showing an example of polarization state of light immediately after it is transmitted through the diffraction element of the present invention.

Fig. 5: (A) is a graph showing an example of diffraction efficiency of the diffraction element of the present invention. (B) is a graph showing an example of diffraction efficiency of a conventional diffraction element.

Fig. 6: A graph showing an example of the relation between diffraction efficiency and twist angle in the diffraction element of the present invention.

Fig. 7: A schematic construction view showing an example of the optical head device of the present invention.

BEST MODE FOR CARRYING OUT THE INVENTION

From now, embodiments of the present invention will be described in detail with reference to attached drawings.

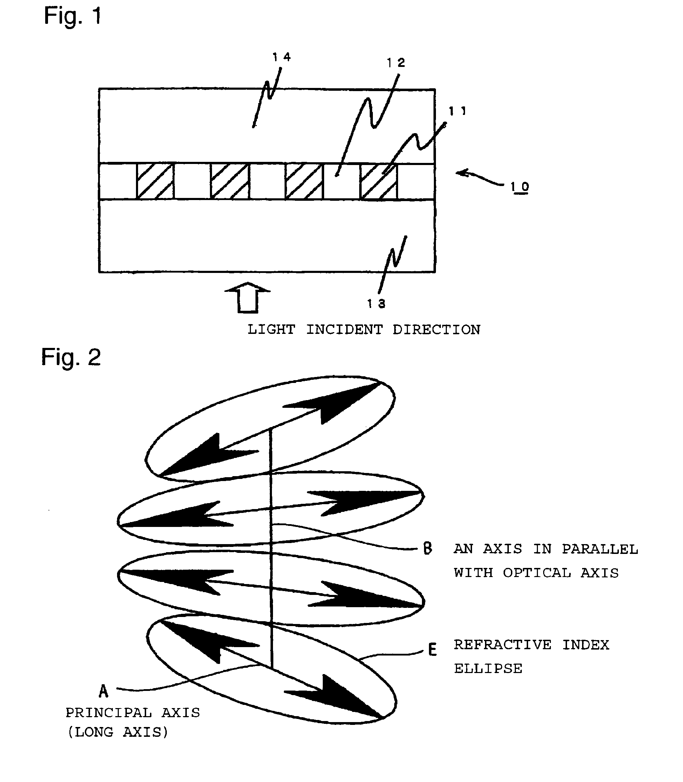

Fig. 1 shows a diffraction element 10 of the present invention, particularly, the figure shows a schematic view of an example of the structure of a diffraction grating constituting the substantial part of the element. The diffraction grating portion of the diffraction element 10 has such a construction that an optically anisotropic medium 11 and an optically isotropic medium 12 having a refractive index of $n_s$ are repeatedly arranged and they are sandwiched by substrates 13 and 14.

An optically anisotropic medium having birefringency, has a construction that a direction in which the refractive index becomes so-called ordinary refractive index $n_o$ (the direction providing the ordinary refractive index $n_o$ is designated as "$n_o$ direction") and a direction in which the refractive index becomes the extraordinary refractive index $n_e$ (the direction providing the extraordinary refractive index $n_o$ is designated as "$n_e$ direction") are present in a plane substantially perpendicular to the propagation direction of light.

Here, the $n_o$ direction and the $n_e$ direction do not have to be perpendicular to the propagation direction of incident light (optical axis) direction but the refractive index needs to change depending on polarization direction of light propagating in the optical axis direction.

In this embodiment, the construction is such that the $n_o$ direction and the $n_e$ direction are spirally twisted in the propagation direction of incident light (the thickness direction from the bottom towards the top in Fig. 1).

Fig. 2 schematically shows the twist of a refractive index ellipse E in the thickness direction. The twist may be one continuously changing or may be one intermittently changing. The refractive index ellipse has two principal axes that are a long axis and a short axis. Here, "A" indicates the long axis direction that is usually an extraordinary refractive index $n_e$ direction.

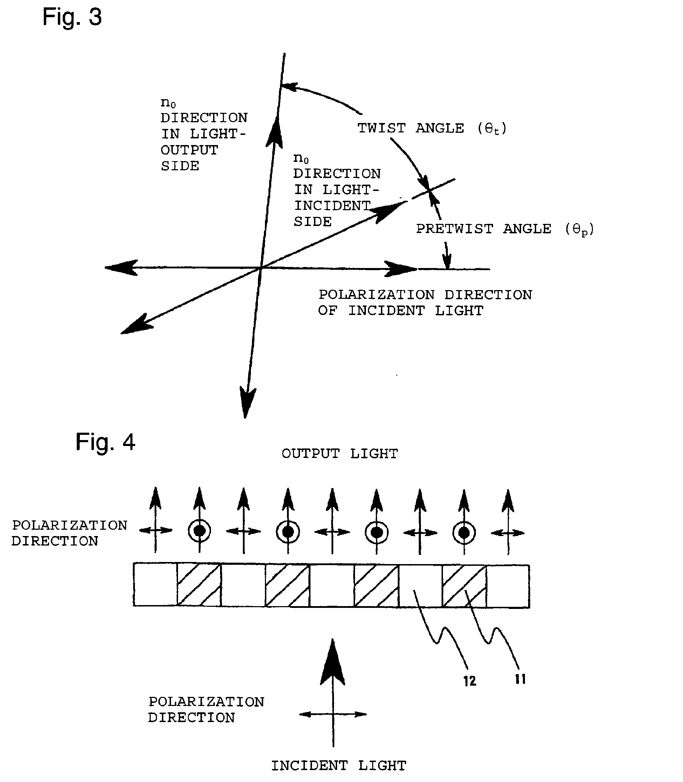

Fig. 3 shows the direction between polarization direction of light incident into an optically isotropic medium (incident polarization direction) and the $n_o$ direction in the optically anisotropic medium. The angle between the $n_o$ direction in the incident side of the optically anisotropic medium and the incident polarization direction, is designated as "pretwist angle ($\theta_p$)". The $n_o$ direction of the optically anisotropic medium, rotates spirally in the thickness direction of the medium, and the direction rotates $\theta_t$ (twist angle) between the incident side surface and the output side surface.

Here, the optically anisotropic medium can be produced by using a polymer liquid crystal formed by polymerizing a monomer liquid crystal having a twist alignment. Instead of the optically anisotropic medium thus produced, an optically anisotropic medium of lamination type formed by laminating thin films having birefringency and having the respective $n_o$ directions rotated

little by little, may also be employed.

Any of these optically anisotropic media is patterned by an etching method to form grating-shaped concaves and convexes, and the concaves are filled with an optically isotropic medium 12, whereby the diffraction element shown Fig. 1 can be produced. Here, the substrates 13 and 14 can be produced by employing a transparent material such as a glass, or a plastic material such as an acrylic resin or polycarbonate.

Then, with respect to the diffraction efficiency of the diffraction element according to the embodiment of the present invention, the principle is qualitatively described with reference to Fig. 4.

Fig. 4 schematically shows the relation between the incident polarized light and the output polarized light, on the assumption that the incident polarization direction is a direction in parallel with the document face. Here, Fig. 4 describes a construction having a pretwist angle ($\theta_p$) of 0° and a twist angle ($\theta_t$) of 90° to make the explanation simple.

In the optically anisotropic medium 11, the difference $\Delta n$ between the refractive indices $n_o$ and $n_e$, and thickness d are set to be appropriate values, whereby polarization direction of light transmitted through the optically anisotropic medium 11 approximately rotates by 90°. On the other hand, polarization direction of light transmitted through the isotropic medium 12, does not change.

For example, in Fig. 4, with respect to a horizontal polarization direction in the document face, the intensity of polarized light having such a polarization direction transmitted through the optically anisotropic medium 11 becomes 0, and only such polarized light transmitted through the isotropic medium 12 has an intensity, and light having a modulated light intensity is diffracted (here, diffracted light is omitted in Fig. 4 to make the explanation simple). Namely, such a construction functions as an amplitude type diffraction element.

Here, although not shown in Fig. 4, with respect to the polarization direction perpendicular to the document face, the construction functions as an amplitude type diffraction element in the same manner.

In an amplitude type diffraction element in which the transmittance is modulated in a grating shape, there are usually portions having low transmittance and thus the intensity of transmitted light (light-utilization efficiency) becomes low. However, in the diffraction element of the present invention, as explained using Fig. 4, intensity modulation is applied to each polarization direction not by absorbing light but by rotating polarization directions, whereby there is no loss of total light intensity of light of two polarization directions. Accordingly, a diffraction element having a light-utilization efficiency comparable to a phase-modulation type diffraction element, can be obtained. Further, since the diffraction principle of the diffraction element is an amplitude modulation type, diffraction efficiency having little wavelength dependence can be obtained.

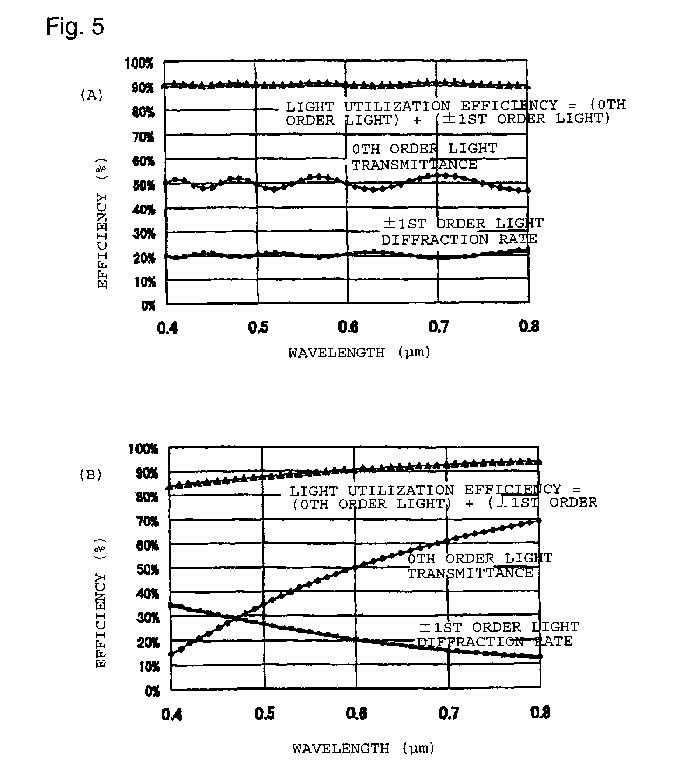

Then, Fig. 5(A) shows a graph showing the relation between diffraction efficiency and wavelength in the diffraction grating of this embodiment, and Fig. 5(B) shows a graph showing the relation between diffraction efficiency and wavelength in a normal phase type diffraction grating (relief type diffraction grating) for comparison.

From Figs. 5(A) and 5(B), it is understandable that the diffraction efficiency of the diffraction grating according to the embodiment of present invention, has a very small wavelength dependence.

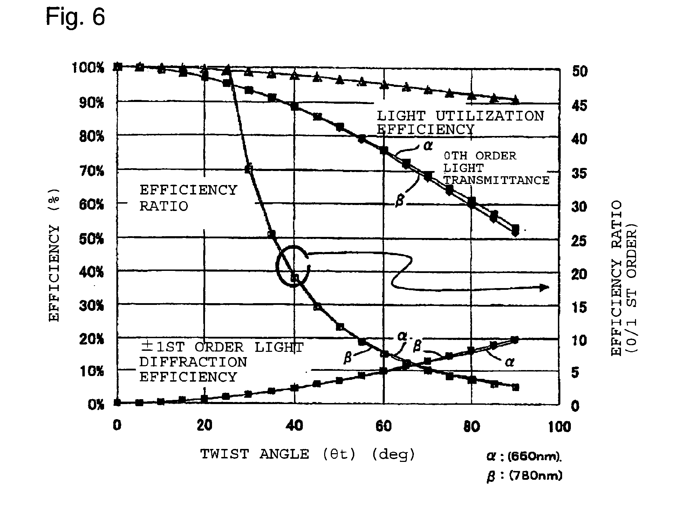

Then, Fig. 6 shows the relation between twist angle and diffraction efficiency with respect to light of two types of wavelengths incident into the diffraction grating of this embodiment. Fig. 6 shows the change of the diffraction efficiencies for incident light having wavelengths of 650 nm and 780 nm respectively in response to the change of twist angle when pretwist angle is maintained to be 0°. Here, the refractive index $n_s$ of the isotropic medium and the refractive index $n_o$ of the anisotropic medium are made to be equal. Further, $\alpha$ and $\beta$ in the graph indicate the diffraction efficiencies and the diffraction efficiency ratios (=0th order light transmission efficiency/1st order light diffraction efficiency) at 650 nm and 780 nm respectively.

As understandable from Fig. 6, with respect to diffraction efficiency and diffraction efficiency ratio (=0th order light transmission efficiency/1st order light diffraction efficiency), each of these properties at 650 nm and 780 nm change according to substantially the same function, and thus the curves of $\alpha$ and $\beta$ substantially overlap to each other in the graph.

Further, it is also understandable that it is possible to change the diffraction efficiency while suppressing the wavelength dependence of the diffraction efficiency, by changing the twist angle.

Here, when the twist angle is less than 10°, diffraction efficiency becomes too low, such being not preferred since such a diffraction efficiency is problematic for practical use, and the twist angle is preferably at least 10°, particularly preferably at least 30°. Further, when the twist angle exceeds 90°, the diffraction efficiency decreases again, and thus the twist angle is preferably set at most 90°.

Further, in this example, the refractive indexes are made so that $n_s=n_o$, but even if $n_s$ does not equal to $n_o$, an equivalent effect can be obtained so long as they are within a range of $n_s=n_o\pm0.2\times(n_e-n_o)$. In particular, by equalizing the refractive indexes $n_s$ and $n_o$, wavelength dependence can be made extremely small, such being preferred. Further, as another example, an equivalent effect can be obtained when they are within a range of $n_s=n_e\pm0.2\times(n_e-n_o)$. In particular, wavelength dependence can be extremely small by making $n_s=n_e$ and making the pretwist angle to be 90° (namely, making the $n_e$ direction and the incident polarization direction be the same), such being preferred. Further, when a certain degree of wavelength dependence is required, the refractive index $n_s$ may be made remarkably different from $n_o$

or $n_e$.

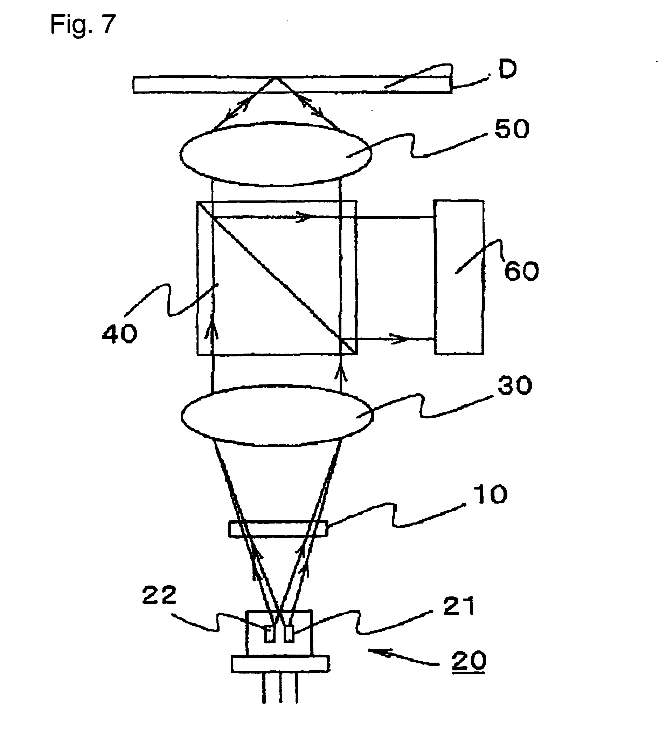

Then, an application of the diffraction grating to an optical head device will be described with reference to Fig. 7 showing an optical head device.

The optical head device has a construction comprising a light source 20, a collimator lens 30, a beam splitter 40, an objective lens 50, a photo-detecting system (a photo-detector) 60 and a diffraction element 10 shown in Fig. 1.

In the optical head device, as the light source 20, a package having laser diodes (LD) 21 and 22 emitting light of two wavelengths (650 nm band and 780 nm band), was employed. Light emitted from the laser diodes 21 and 22 is transmitted through the diffraction grating 10 to generate three beams for tracking (Fig. 7 only shows 0th order light for simplification), and these three beams are transmitted through the collimator lens 30, the beam splitter 40, the objective lens 50 and converged on an optical disk D as an optical recording medium.

Light reflected by the optical disk D, is transmitted through the objective lens 50 and reflected by the beam splitter 40 and led to the photo detecting system 60.

Here, the diffraction element 10 needs to diffract light of 780 nm band at a time of reproducing from or recording to a CD, and the element needs to diffract light of 650 nm band at a time of reproducing from or recording to a DVD, to generate three beams. Here, these laser diodes may include a blue-violet laser diode of 405 nm band.

With respect to the diffraction efficiency required in this application, for example, the ratio between 0th order transmission efficiency and 1st order diffraction efficiency, namely the diffraction efficiency ratio (0th order light transmission efficiency/1st order diffraction efficiency), is usually from about 10 to 25, and from 20 to 15 in many cases. Here, if the diffraction efficiencies for DVD and CD are significantly different, gain adjustment for the photo detecting system becomes difficult and light quantity of side beams becomes too low and noise level increases to deteriorate recording and reproducing properties. On the other hand, if the side beam intensity is too high, recording by such side beams occurs to deteriorate recording properties. Preferably, the diffraction efficiencies for the respective wavelengths of light for DVD and CD are equal.

Here, in the case where the pretwist angle is 0° and the twist angle is 90° as shown in Fig. 5, the diffraction efficiency ratio between 0th order transmission efficiency and 1st order diffraction efficiency, is 2.5 that is too small (1st order light diffraction efficiency is too high), and such a construction is not always suitable for three beams. In this case, as shown in Fig. 6, a desired diffraction efficiency ratio can be obtained by changing the twist angle. For example, by making the twist angle from 30° to about 60° as shown in Fig. 6, the diffraction efficiency ratio becomes a value suitable for a diffraction element for three beams.

Further, when a product L of the thickness d of an optically anisotropic material multiplied by a diffraction efficiency difference $n_e$-$n_s$, namely:

$$L = (n_e - n_s) \cdot d$$
$$= n \cdot \lambda$$

wherein n: integer,
is an integer times of the wavelength ($\lambda$; 650 nm or 780 nm) of incident light, wavelength dependence of diffraction efficiency can be minimized, such being preferred.

Further not only in a case where the diffraction efficiencies for two wavelengths are equalized, but also in a case where the diffraction efficiencies are set to the respective desired values, such a setting is possible by changing pretwist angle, twist angle, refractive indexes of materials and the thickness of a medium.

Further, when the incident polarization direction and a principal axis direction of the refractive index elliptic body of an optically anisotropic medium, are at an angle of within $\pm 20°$, wavelength dependence of diffraction efficiency becomes small, such being preferred. Further, when the incident polarization direction and a principal axis direction of the refractive index elliptic body of the optical anisotropic medium, are equal (i.e. when the pretwist angle is 0° or 90°), wavelength dependence of the diffraction efficiency becomes further small, such being preferred.

Further, by using the diffraction element in combination with a phase plate (such as a quarter wave plate or a half wave plate) which changes polarization, polarization state of light transmitted through these elements can be changed, such being preferred. Further, when a quarter wave plate is laminated, the optical axis angle of the phase plate is arranged to be at an angle of 45° to the twist angle.

Further, in a case where the polarization direction of incident light varies from its set direction or in a case where the direction significantly changes by e.g. temperature characteristic, e.g. variation of diffraction efficiency can be reduced by using a polarizing diffraction element whose diffraction efficiency significantly changes depending on the polarization direction, and aligning the designed incident polarization direction of the diffraction element of the present invention with the polarization direction of the polarizing diffraction element providing high transmittance for 0th order light, such being preferred.

Here, since it is possible to stabilize the properties of the phase plate and the polarizing diffraction element by using these elements with their rotational directions aligned with the rotational direction of the diffraction element of the present invention, these elements are preferably integrated together for use rather than using these components separately. Further, such an integration can reduce the number of components, such being preferred.

Further, since a CD and a DVD to be used as optical disks D have different track pitches, a diffraction element having a simple linear stripe pattern can not produce a good tracking signal in some cases. In such cases, for example, by dividing the pattern of diffraction grating and shifting the phase of the arrangements of the grating, a sufficient tracking signal can be obtained both from CDs and DVDs, such being preferred.

EXAMPLE 1

An example of the present invention will be described as follows.

A diffraction element of Example 1 comprising the diffraction grating of the present invention, will be described with reference to Fig. 1, Fig. 3 and Fig. 5.

In the diffraction element of Example 1, a polymer liquid crystal is formed on a glass substrate 13 by polymerizing a monomer liquid crystal having a twist alignment. The polymer liquid crystal as an optically anisotropic medium 11, has a thickness of about 10 $\mu$m, a refractive index $n_e$ of 1.67 and a refractive index $n_o$ of 1.52.

The alignment direction of the liquid crystal is controlled so that the pretwist angle shown in Fig. 3 becomes 0° and the twist angle shown in Fig. 3 becomes 90°. The polymer liquid crystal having such a twist is processed by a photolithography method and an etching method to form a concave-convex shaped grating. Concaves of the concave-convex shape are filled with a resin having a refractive index $n_s$ of 1.52 (the same as $n_o$).

The wavelength dependence of the diffraction efficiency of the diffraction element 10 thus formed, is expected to result in having properties equivalent to the properties shown in Fig. 5. Thus, a diffraction element having a diffraction efficiency scarcely changing depending on wavelength, can be obtained.

EXAMPLE 2

Then, an optical head device of Example 2 having the diffraction grating 10 of the present invention, will be described with reference to the construction view of Fig. 7.

In Example 2, a diffraction element formed by the same method as Example 1, is employed as the diffraction element 10, and the twist angle is 40°. The diffraction grating of the diffraction element has a grating pattern divided into regions, and the phase of grating arrangement is shifted between the divided regions to form a phase shift diffraction grating.

Further, as the diffraction element 10, one having a 1st order light diffraction efficiency and 0th order light transmission light efficiency of about 4.5% and about 88% respectively, for both of wavelengths 650 nm and 780 nm, and having a diffraction efficiency ratio (0th order light transmission light efficiency/1st order light diffraction efficiency) of 19.6, is employed.

As a light source 20, a package having laser diodes 21 and 22 emitting light of two wavelengths (650 nm band and 780 nm band), is employed and such light sources 21 and 22 are configured to be switched for operation depending on the type of optical disk D.

Accordingly, in the optical head device of Example 2, light emitted from the laser diode 21 or 22 transmitted through the diffraction element 10 generates three beams (0th order light and $\pm$1st order light) for tracking (Fig. 7 only shows 0th order light for simplification). Then, the three-beam light is transmitted through a collimator lens 30, a beam splitter 40 and an objective lens 50 to be converged on an optical disk D.

Light reflected by the optical disk D, is transmitted through the objective lens 50 and reflected by the beam splitter 40 to be led to a photo-detecting system 60.

According to the optical head device of Example 2, in both cases of using CDs and DVDs as optical disks D, output signal having good reproducing properties can be obtained from the photo-detecting system 60. Further, substantially the same tracking signal level can be obtained from CDs and DVDs.

Here, the present invention is not limited to the above-mentioned embodiments, and can be carried out in various types of embodiments within a range of not departing from the gist of the present invention.

INDUSTRIAL APPLICABILITY

The diffraction element of the present invention has an effect of reducing variation of diffraction efficiency depending on wavelength, and has a construction that an optically anisotropic medium having birefringency and an optically isotropic medium, are arranged periodically and alternately, and principal directions of the refractive index ellipse in a plane substantially perpendicular to the optical axis direction on which light is transmitted, are spirally rotated around the optical axis direction, whereby it is possible to obtain a diffraction element having substantially the same diffraction efficiencies for light of 650 nm and 780 nm for DVDs and CDs respectively, and whereby the diffraction element is useful for e.g. an optical head device employing a diffraction element, for recording to and/or reproducing from an optical recording medium such as an optical disk.

**Claims**

1. A diffraction element comprising an optically anisotropic medium having birefringency and an optically isotropic medium, the optically anisotropic medium and the optically isotropic medium being periodically and alternately arranged to diffract incident light, wherein a principal axis direction of the refractive index ellipse of the optically anisotropic medium, in a plane perpendicular to an optical axis direction on which the incident light is transmitted, is spirally rotated around an axis in parallel with the optical axis.

2. The diffraction element according to Claim 1, wherein the optically anisotropic medium having birefringency, is a polymer liquid crystal formed by polymerizing a liquid crystal.

3. The diffraction element according to Claim 1 or 2, wherein the short axis refractive index $n_o$ or the long axis refractive index $n_e$ of the material forming the optically anisotropic medium, is equal or close to the refractive index of the optically isotropic medium.

4. The diffraction element according to any one of Claims 1 to 3, wherein the twist angle of the principal axis direction of the refractive index ellipse, is within a range of from 10° to 90°.

5. An optical head device comprising a light source for emitting light having at least two types of wavelengths, an objective lens for conversing light emitted from the light source on an optical recording medium, and a photodetector for receiving reflected light converged and reflected by the optical recording medium, wherein the diffraction element as defined in any one of Claims 1 to 4 is disposed in an optical path between the light source and the optical recording medium, on which the light having at least two types of wavelengths is transmitted.

6. The optical head device according to Claim 5, wherein the principal axis direction of the refractive index ellipse in a plane in the light-incident side of the optically anisotropic medium of the diffraction element, is perpendicular to the optical axis direction of light transmitted through the optically anisotropic medium, and equal or close to the polarization direction of the incident light.

7. The optical head device according to Claim 5 or 6, wherein the diffraction element and a phase plate for changing polarization state of transmission light, are integrally formed.

8. The optical head device according to any one of Claims 5 to 7, wherein the diffraction element and a polarizing diffraction element whose diffraction efficiency changes depending on polarization direction, are integrally formed.

9. The optical head device according to any one of Claims 5 to 8, wherein the phase of periodicity of the diffraction grating pattern of the diffraction element, changes in the main body of the diffraction element.

Fig. 1

LIGHT INCIDENT DIRECTION

Fig. 2

B AN AXIS IN PARALLEL WITH OPTICAL AXIS

E REFRACTIVE INDEX ELLIPSE

A PRINCIPAL AXIS (LONG AXIS)

## Fig. 3

$n_0$
DIRECTION
IN LIGHT-
OUTPUT
SIDE

TWIST ANGLE $(\theta_t)$

$n_0$
DIRECTION
IN LIGHT-
INCIDENT
SIDE

PRETWIST ANGLE $(\theta_p)$

POLARIZATION DIRECTION
OF INCIDENT LIGHT

## Fig. 4

OUTPUT LIGHT

POLARIZATION
DIRECTION

POLARIZATION
DIRECTION

INCIDENT LIGHT

12   11

## Fig. 5

(A)

EFFICIENCY (%)

LIGHT UTILIZATION EFFICIENCY = (0TH ORDER LIGHT) + (±1ST ORDER LIGHT)

0TH ORDER LIGHT TRANSMITTANCE

±1ST ORDER LIGHT DIFFRACTION RATE

WAVELENGTH (μm)

(B)

EFFICIENCY (%)

LIGHT UTILIZATION EFFICIENCY = (0TH ORDER LIGHT) + (±1ST ORDER

0TH ORDER LIGHT TRANSMITTANCE

±1ST ORDER LIGHT DIFFRACTION RATE

WAVELENGTH (μm)

## Fig. 6

Fig. 7

## INTERNATIONAL SEARCH REPORT

| | International application No. |
|---|---|
| | PCT/JP2004/016441 |

**A. CLASSIFICATION OF SUBJECT MATTER**
Int.Cl⁷ G02B5/18, G02B5/30, G11B7/135

According to International Patent Classification (IPC) or to both national classification and IPC

**B. FIELDS SEARCHED**

Minimum documentation searched (classification system followed by classification symbols)
Int.Cl⁷ G02B5/18, G02B5/30, G11B7/135

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2005 |
| Kokai Jitsuyo Shinan Koho | 1971–2005 | Jitsuyo Shinan Toroku Koho | 1996–2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-21576 A (Asahi Glass Co., Ltd.), | 1-4 |
| Y | 23 January, 1998 (23.01.98), | 5-9 |
| | Full text; all drawings | |
| | particularly, Claims 1 to 3; Par. Nos. | |
| | [0025] to [0026], [0030] to [0032], | |
| | [0035] to [0037], [0042] to [0049] | |
| | (Family: none) | |
| | | |
| X | JP 10-68820 A (Asahi Glass Co., Ltd.), | 1-4 |
| Y | 10 March, 1998 (10.03.98), | 5-9 |
| | Full text; all drawings | |
| | particularly, Claims 1 to 7; Par. Nos. | |
| | [0022] to [0025], [0033], [0042] to [0052] | |
| | (Family: none) | |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 February, 2005 (08.02.05) | 01 March, 2005 (01.03.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2004/016441 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-312329 A (Asahi Glass Co., Ltd.), 09 November, 1999 (09.11.99), Full text; all drawings (Family: none) | 1-9 |
| Y | JP 2002-196123 A (Asahi Glass Co., Ltd.), 10 July, 2002 (10.07.02), Full text; all drawings (Family: none) | 5-9 |

Form PCT/ISA/210 (continuation of second sheet) (January 2004)